# FASCICULE DE BREVET EUROPEEN

(11) **EP 1 091 169 B1**
(45) Date de publication et mention de la délivrance du brevet: **14.05.2003**
(21) Numéro de dépôt: 00402643.1
(22) Date de dépôt: 22.09.2000
(51) Int. Cl.: F22B 1/02, F22B 37/20

(54) **Générateur de vapeur comportant une plaque de répartition pour favoriser l'écoulement de l'eau d'alimentation au-dessus de la plaque tubulaire**
Dampferzeuger mit einer Verteilungsplatte zur Speisewasserströmungsverbesserung oberhalb der Rohrplatte
Steam generator with a distributing plate for enhancing the feedwater flow above the tube plate

(30) Priorité: 08.10.1999 FR 9912584
(43) Date de publication de la demande: 11.04.2001
(73) Titulaire: Framatome ANP, 92400 Courbevoie (FR)
(72) Inventeur: Billoue, Jean-Paul, 78130 Chapet (FR); Cornu, Bernard, 78340 Les Clayes-Sous-Bois (FR); Destre, Daniel, 93600 Aulnay-Sous-Bois (FR)
(74) Mandataire: Bouget, Lucien

(56) Documents cités:
- DE-A- 2 243 402
- FR-A- 2 597 577

## Description

L'invention concerne un générateur de vapeur, en particulier un générateur de vapeur d'un réacteur nucléaire à eau sous pression, qui comporte une plaque de répartition d'eau d'alimentation dans le générateur de vapeur.

Les réacteurs nucléaires à eau sous pression comportent des générateurs de vapeur qui sont utilisés pour échauffer et vaporiser de l'eau d'alimentation, en utilisant de la chaleur transportée par l'eau de refroidissement du réacteur nucléaire.

Un tel générateur de vapeur est décrit dans DE-A-22 43 402.

Le générateur de vapeur comporte une enveloppe externe de forme globalement cylindrique disposée en service avec son axe vertical, dans laquelle sont réalisés l'échauffement et la vaporisation de l'eau d'alimentation. L'eau de refroidissement du réacteur nucléaire est amenée à circuler dans le générateur de vapeur à l'intérieur de tubes d'un faisceau disposé à l'intérieur d'une enveloppe de faisceau qui est fixée dans une disposition coaxiale à l'intérieur de l'enveloppe externe du générateur de vapeur. Chacun des tubes du faisceau comporte généralement deux branches droites dont les extrémités sont serties, chacune dans une ouverture traversant une plaque tubulaire fixée dans une disposition transversale à l'intérieur de l'enveloppe externe du générateur de vapeur, c'est-à-dire dans une disposition perpendiculaire à l'axe commun à l'enveloppe externe et à l'enveloppe de faisceau du générateur de vapeur, constituant l'axe du générateur de vapeur.

L'enveloppe de faisceau du générateur de vapeur délimite avec l'enveloppe externe un espace annulaire s'étendant suivant la direction axiale verticale du générateur de vapeur et le générateur de vapeur comporte des moyens d'introduction et de distribution d'eau dans la partie supérieure de l'espace annulaire. De plus, l'enveloppe de faisceau comporte un bord inférieur situé à une certaine distance au-dessus de la face supérieure de la plaque tubulaire, de telle sorte que l'eau d'alimentation introduite dans la partie supérieure de l'espace annulaire circule tout d'abord de haut en bas dans l'espace annulaire, puis pénètre dans l'enveloppe de faisceau par l'ouverture ménagée entre la partie inférieure de l'enveloppe de faisceau et la plaque tubulaire pour circuler ensuite de bas en haut à l'intérieur de l'enveloppe de faisceau au contact de la surface extérieure des tubes dans lesquels l'eau de refroidissement du réacteur nucléaire est mise en circulation.

L'eau d'alimentation est ainsi échauffée et vaporisée progressivement, lors de sa circulation au contact des tubes du faisceau.

La vapeur obtenue à la sortie du générateur de vapeur est envoyée à la turbine de la centrale nucléaire puis est récupérée sous forme de condensat qui sont recyclés dans le circuit secondaire du générateur de vapeur dans lequel circule l'eau d'alimentation. Au cours de sa circulation dans le circuit secondaire et à travers le générateur de vapeur, l'eau d'alimentation se charge en matières solides telles que des oxydes sous forme de particules en suspension dans l'eau d'alimentation. Ces particules sont susceptibles de se déposer dans les zones du circuit secondaire où l'eau d'alimentation circule à basse vitesse. En particulier, ces matières en suspension sont susceptibles de se déposer sur la face supérieure de la plaque tubulaire qui produit une déflexion des courants d'eau d'alimentation provenant de l'espace annulaire périphérique, de manière à diriger l'eau d'alimentation de la périphérie vers la partie centrale du générateur de vapeur et à orienter les courants d'eau progressivement dans la direction verticale et de bas en haut, au contact des tubes du faisceau.

Les particules de matières en suspension tendent à se déposer dans certaines zones de la plaque tubulaire dans lesquelles les vitesses de circulation sont les plus faibles, et en particulier dans la partie centrale de la plaque tubulaire.

Les tubes du faisceau qui comportent chacun deux branches droites sont maintenus à l'intérieur de l'enveloppe par des plaques-entretoises transversales, c'est-à-dire perpendiculaires à l'axe du faisceau réparties suivant la direction axiale du générateur de vapeur, de manière que les branches droites des tubes qui sont engagées dans des ouvertures traversant les plaques-entretoises soient maintenues dans des directions parallèles à l'axe du générateur de vapeur et suivant des dispositions en réseau dans les plans transversaux du faisceau. Les ouvertures traversant les plaques-entretoises sont réalisées de manière à pouvoir assurer d'une part le maintien des tubes du faisceau dans des directions transversales et d'autre part le passage de l'eau d'alimentation à travers les plaques-entretoises successives, au contact des tubes du faisceau.

De manière à limiter les zones de circulation à basse vitesse de l'eau d'alimentation au contact de la plaque tubulaire qui sont des zones potentielles de dépôt des matières en suspension dans l'eau d'alimentation, on a proposé de disposer, dans la partie basse de l'enveloppe du faisceau, une plaque de distribution du débit d'eau d'alimentation qui comporte, comme les plaques-entretoises, des ouvertures de passage de tubes du faisceau et qui est réalisée de manière à favoriser l'écoulement de l'eau d'alimentation au-dessus de la plaque tubulaire, en particulier de la périphérie vers la partie centrale du faisceau. Pour cela, la plaque de distribution de débit d'eau d'alimentation peut être réalisée de manière à présenter un trou circulaire dans sa partie centrale et disposée à une hauteur bien déterminée au-dessus de la plaque tubulaire.

Les deux branches de chacun des tubes du faisceau sont fixées par sertissage et soudage de leurs extrémités dans des trous traversant la plaque tubulaire disposés suivant une structure en réseau analogue au réseau des ouvertures des plaques-entretoises. Les trous traversant la plaque tubulaire sont répartis de part et d'autre d'une zone centrale exempte de trous, si bien qu'un espace libre ou rue d'eau centrale est ménagé à l'intérieur du faisceau à la verticale de la zone de la plaque tubulaire exempte de trous occupant une zone diamétrale de la plaque tubulaire.

Afin d'éviter qu'un débit important d'eau d'alimentation ne s'écoule dans la rue d'eau du générateur de vapeur, on a proposé de placer des dispositifs de blocage à l'intérieur de la rue d'eau pour obliger l'eau d'alimentation à se diriger vers les zones occupées par les tubes du faisceau.

Dans le cas de dispositifs tels que décrits, les ouvertures de passage de tubes traversant les plaques-entretoises et les trous traversant la plaque de répartition sont réalisés par perçage et/ou par brochage et peuvent présenter une section ayant une forme trilobée ou quadrilobée, c'est-à-dire une section permettant de recevoir et de maintenir un tube du faisceau dans une partie centrale, prolongée radialement par trois ou quatre lobes permettant le passage d'eau de refroidissement autour du tube.

L'utilisation d'une plaque de répartition telle que décrite plus haut favorise donc une circulation de l'eau d'alimentation dans laquelle une partie substantielle de l'eau d'alimentation qui est dirigée vers la partie centrale du faisceau tubulaire traverse la plaque de distribution par son ouverture centrale, avec une vitesse sensiblement plus importante que dans la zone périphérique de la plaque. Cette utilisation d'une plaque de répartition comportant un trou central permet de limiter les dépôts sur la plaque tubulaire mais peut en revanche favoriser l'entraînement de matières en suspension dans l'eau d'alimentation, vers des zones du faisceau tubulaire situées au-dessus de la plaque de répartition et vers les plaques-entretoises.

Pour limiter le plus possible cet entraînement de matières en suspension dans l'eau d'alimentation vers les parties supérieures du faisceau tubulaire, on a recherché une solution permettant d'obtenir une répartition plus équilibrée des vitesses dans l'ensemble de la partie inférieure du générateur de vapeur.

Le but de l'invention est donc de proposer un générateur de vapeur, en particulier un générateur de vapeur d'un réacteur nucléaire à eau sous pression, utilisé pour échauffer et vaporiser de l'eau d'alimentation circulant en contact thermique avec un fluide chaud mis en circulation à l'intérieur de tubes d'un faisceau comportant chacun deux branches droites, comprenant une enveloppe externe de forme globalement cylindrique, une plaque tubulaire fixée dans une disposition perpendiculaire à l'axe de l'enveloppe externe et percée d'ouvertures de réception des extrémités des branches droites des tubes du faisceau, une enveloppe de faisceau disposée coaxialement à l'intérieur de l'enveloppe externe, dans laquelle est disposé le faisceau de tubes dont les branches droites sont parallèles à l'axe du générateur de vapeur commun à l'enveloppe externe et à l'enveloppe du faisceau et dont un bord inférieur est disposé au-dessus de la plaque tubulaire, une pluralité de plaques transversales parallèles entre elles et à la plaque tubulaire fixées dans des dispositions réparties suivant la direction axiale du générateur de vapeur, à l'intérieur de l'enveloppe de faisceau et traversées par des ouvertures de passage de chacune des branches des tubes du faisceau ménageant des espaces de circulation d'eau d'alimentation ainsi que des moyens d'introduction d'eau d'alimentation dans un espace annulaire entre l'enveloppe externe et l'enveloppe de faisceau, au-dessus de la plaque tubulaire, de manière que l'eau d'alimentation circule d'abord de haut en bas dans l'espace annulaire, puis de bas en haut dans l'enveloppe de faisceau au contact des tubes du faisceau après être passée sous le bord inférieur de l'enveloppe de faisceau, ce générateur de vapeur permettant d'obtenir une répartition équilibrée des vitesses dans l'ensemble de la partie inférieure du générateur de vapeur.

Dans ce but, la plaque transversale disposée le plus près de la plaque tubulaire, appelée plaque de répartition, comporte, dans une zone centrale sensiblement circulaire ayant pour axe l'axe du générateur de vapeur, et un rayon au plus égal à 40 % du rayon de la plaque transversale sensiblement égal au rayon interne de l'enveloppe de faisceau, des ouvertures de passage de tubes et d'eau d'alimentation ayant une première section S₁ et, dans une seconde zone à la périphérie de la zone centrale, des ouvertures de passage de tubes et d'eau d'alimentation ayant une seconde section S₂ dont l'aire est inférieure à l'aire de la première section S₁.

De préférence, la rue d'eau centrale du générateur de vapeur ne comporte pas de dispositif de blocage limitant la circulation d'eau d'alimentation, ce qui permet de faciliter le nettoyage de la plaque tubulaire sur laquelle des particules de matières en suspension dans l'eau d'alimentation sont susceptibles de se déposer, du fait des basses vitesses de circulation au contact de certaines zones de la plaque tubulaire, dues à l'absence de trou circulaire de passage d'eau d'alimentation dans la zone centrale de la plaque de répartition.

De préférence, la surface totale de passage de l'eau d'alimentation à travers la plaque de répartition est plus importante dans la zone périphérique que dans la zone centrale, bien que la section unitaire des ouvertures de passage de tubes soit plus importante dans la zone centrale que dans la zone périphérique.

Afin de bien faire comprendre l'invention, on va maintenant décrire, à titre d'exemple, en se référant aux figures jointes en annexe, un générateur de vapeur comportant une plaque de répartition, selon l'invention.
La figure 1 est une vue en coupe partielle d'un générateur de vapeur d'un réacteur nucléaire à eau sous pression.
La figure 2 est une vue partielle en perspective éclatée de la partie inférieure d'un générateur de vapeur comportant une plaque de répartition, suivant l'invention.
La figure 3 est une vue en coupe axiale suivant la rue d'eau centrale de la partie inférieure du générateur de vapeur représentée sur la figure 2.
La figure 4 est une vue en plan d'un quadrant de la plaque de répartition du générateur de vapeur représenté sur les figures 2 et 3.
La figure 5 est une vue à grande échelle d'ouvertures traversant la partie centrale de la plaque de répartition du générateur de vapeur représentée sur la figure 4.
La figure 6 est une vue à grande échelle d'ouvertures traversant la partie périphérique de la plaque de répartition du générateur de vapeur représentée sur la figure 4.
La figure 7 est un diagramme de répartition des vitesses de l'eau d'alimentation dans la partie inférieure du générateur de vapeur suivant l'invention.

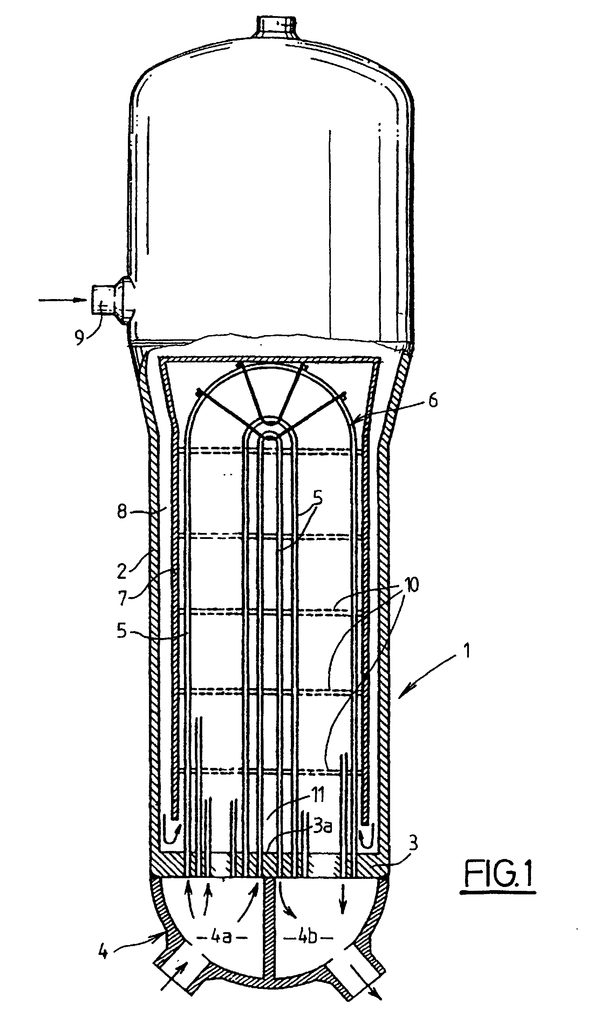

Sur la figure 1, on voit un générateur de vapeur d'un réacteur nucléaire à eau sous pression désigné de manière générale par le repère 1, comportant une enveloppe externe 2 de forme globalement cylindrique disposée en service avec son axe vertical.

A sa partie inférieure, l'enveloppe externe 2 est solidaire d'une plaque tubulaire 3 de direction transversale, c'est-à-dire perpendiculaire à l'axe de l'enveloppe externe 2. La plaque tubulaire 3 est traversée par des ouvertures dans chacune desquelles est engagée la partie d'extrémité d'une branche droite d'un tube 5 du faisceau de tubes 6 cintrés et présentant une forme en U.

Sous la plaque tubulaire 3 est fixée une boîte à eau 4 en deux parties 4a et 4b, séparées par une cloison.

Les ouvertures d'engagement et de fixation des extrémités des branches droites des tubes 5 traversant la plaque tubulaire 3 sont réparties de part et d'autre d'une zone centrale 3a de la plaque tubulaire 3 ne comportant pas d'ouverture. Chacun des tubes 5 du faisceau comporte une branche droite dont l'extrémité est fixée dans une ouverture située d'un côté de la partie centrale 3a de direction diamétrale de la plaque tubulaire 3 et une seconde branche droite dont la partie d'extrémité est fixée dans une ouverture traversant la plaque tubulaire 3, de l'autre côté de la partie centrale diamétrale 3a.

Les ouvertures de fixation des parties d'extrémité des tubes 5 situées d'un côté de la zone centrale 3a et des branches droites des tubes correspondants débouchent dans le compartiment d'entrée 4a de la boîte à eau alors que les ouvertures traversant la plaque tubulaire 3 situées de l'autre côté de la zone centrale diamétrale et les branches droites des tubes 5 correspondantes débouchent dans le compartiment de sortie 4b de la boîte à eau.

Pendant le fonctionnement du générateur de vapeur, de l'eau de refroidissement du réacteur à haute température provenant de la cuve renfermant le coeur du réacteur est introduite dans le compartiment d'entrée 4a et distribuée dans chacun des tubes 5 du faisceau. De l'eau de refroidissement circule dans les tubes 5 suivant toute leur longueur pour ressortir dans le compartiment de sortie 4b de la boîte à eau.

Le faisceau 6 de tubes 5 du générateur de vapeur est disposé à l'intérieur d'une enveloppe de faisceau 7 de forme globalement cylindrique disposée de manière coaxiale à l'intérieur et dans la partie inférieure à plus faible diamètre de l'enveloppe externe 2 du générateur de vapeur. L'axe commun à l'enveloppe externe 2 et à l'enveloppe de faisceau 7 constitue également l'axe du faisceau 6. Cet axe sera désigné comme axe du générateur de vapeur disposé en service dans la direction verticale.

L'enveloppe de faisceau 7 comporte un bord inférieur disposé à une certaine distance au-dessus de la face supérieure de la plaque tubulaire 3.

L'enveloppe externe 2 et l'enveloppe de faisceau 7 délimitent entre elles un espace annulaire 8 qui communique à sa partie inférieure, avec l'espace interne de l'enveloppe de faisceau 7 renfermant le faisceau 6 de tubes 5 du générateur de vapeur.

De l'eau d'alimentation, ou fluide secondaire, est introduite dans l'espace annulaire 8, pendant le fonctionnement du générateur de vapeur, par une tubulure 9 et un dispositif de distribution d'eau d'alimentation disposé au-dessus de la partie supérieure de l'espace annulaire 8.

Les tubes 5 du faisceau 6 sont maintenus transversalement, à l'intérieur de l'enveloppe de faisceau 7, par des plaques-entretoises transversales 10 réparties suivant la direction axiale de l'enveloppe de faisceau 7.

Les plaques-entretoises 10 sont traversées par des réseaux d'ouvertures ayant une disposition analogue aux ouvertures d'engagement des extrémités des branches droites des tubes 5 traversant la plaque tubulaire 3. Les ouvertures de passage des tubes des plaques-entretoises 10 ménagent, autour des tubes qui sont maintenus transversalement par des bords des ouvertures, des passages d'eau d'alimentation du générateur de vapeur.

A la verticale de la zone centrale 3a de la plaque tubulaire 3 ne comportant pas d'ouverture d'engagement et de fixation d'extrémités de tubes 5, un espace libre 11 ou rue d'eau centrale est ménagé à l'intérieur du faisceau 6 du générateur de vapeur.

Lors du fonctionnement du générateur de vapeur, comme indiqué plus haut, de l'eau de refroidissement du réacteur nucléaire à haute température circule à l'intérieur des tubes 5 du faisceau et de l'eau d'alimentation est introduite par la tubulure 9, de manière à être répartie dans la partie supérieure de l'espace annulaire 8.

L'eau introduite dans l'espace annulaire 8 circule de haut en bas dans cet espace annulaire jusqu'à parvenir au niveau de l'ouverture de forme annulaire ménagée entre le bord inférieur de l'enveloppe de faisceau 7 et la face supérieure de la plaque tubulaire 3 et permettant le passage de l'eau d'alimentation à l'intérieur de l'enveloppe de faisceau 7 où l'eau d'alimentation circule dans une direction sensiblement verticale et de bas en haut, une partie de l'eau d'alimentation étant dirigée de la partie périphérique vers la partie centrale du faisceau.

L'eau d'alimentation en circulation au contact des tubes du faisceau s'échauffe et se vaporise pour ressortir sous forme de vapeur à la partie supérieure de l'enveloppe externe 2 du générateur de vapeur.

La plaque transversale 10 disposée le plus près de la plaque tubulaire 3, c'est-à-dire la plaque 10 placée immédiatement au-dessus de la plaque tubulaire 3 peut être réalisée sous la forme d'une plaque de répartition permettant de favoriser la circulation à la partie centrale du faisceau et à limiter le plus possible le dépôt de matières solides en suspension dans l'eau d'alimentation sur la face supérieure de la plaque tubulaire 3.

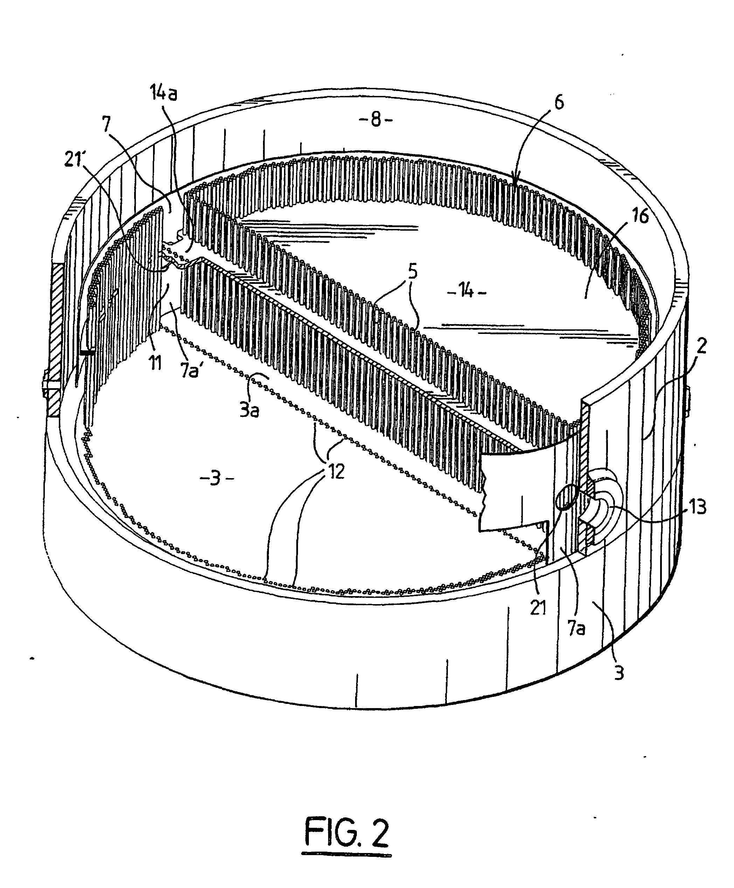

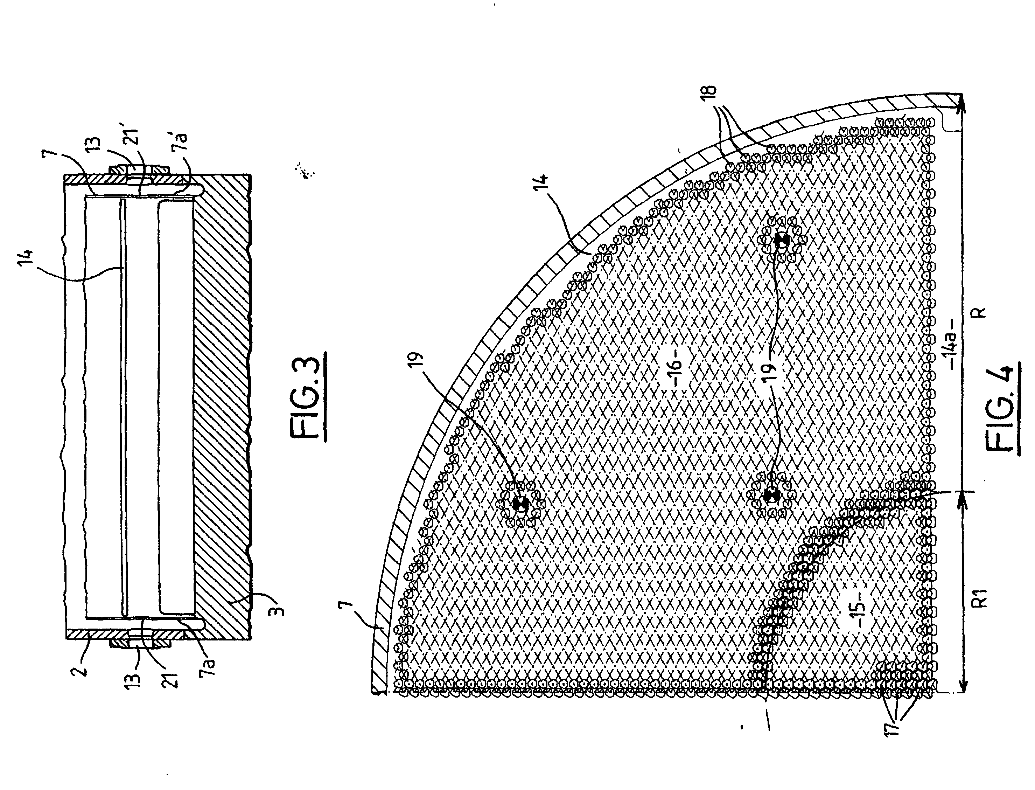

Dans le cas d'un générateur de vapeur suivant l'invention dont la partie inférieure du faisceau a été représentée en particulier sur les figures 2 et 3, la plaque fixée à l'intérieur de l'enveloppe de faisceau et disposée immédiatement au-dessus de la plaque tubulaire du générateur de vapeur peut être réalisée sous la forme d'une plaque de répartition et de régulation de débit d'eau d'alimentation permettant d'obtenir une répartition équilibrée des vitesses de l'eau de refroidissement dans la partie basse du générateur de vapeur.

Les éléments correspondants sur la figure 1 et sur les figures 2 et 3 sont désignés par les mêmes repères.

Sur les figures 2 et 3, on a représenté la partie inférieure d'un générateur de vapeur suivant l'invention, au voisinage de la plaque tubulaire 3, solidaire de la partie inférieure de l'enveloppe externe 2.

La plaque tubulaire 3 est traversée par des ouvertures 12 de fixation des parties d'extrémité des branches droites des tubes 5 du faisceau 6 du générateur de vapeur.

Dans une partie centrale 3a de direction diamétrale, la plaque tubulaire 3 ne comporte pas d'ouverture de fixation de parties d'extrémité de branches de tubes 5, les ouvertures 12 étant disposées sous la forme de réseaux d'ouvertures, de part et d'autre de la zone centrale diamétrale 3a.

La zone vide de tubes au-dessus de la zone centrale diamétrale 3a constitue la rue d'eau 11 du générateur de vapeur.

Aux extrémités de la rue d'eau centrale 11, l'enveloppe externe 2 comporte des ouvertures circulaires constituant des trous de poing 13 permettant de réaliser des inspections et des interventions à l'intérieur du faisceau du générateur de vapeur.

Le générateur de vapeur selon l'invention, représenté partiellement sur les figures 2 et 3, comporte un ensemble de plaques-entretoises fixées transversalement à l'intérieur de l'enveloppe de faisceau 7 et réparties suivant la direction axiale du faisceau.

Les plaques-entretoises transversales sont traversées par les réseaux d'ouvertures de passage des tubes du faisceau, dans des dispositions analogues au réseau d'ouvertures 12 traversant la plaque tubulaire 3. Les ouvertures de passage de tubes des plaques transversales assurent le maintien transversal des tubes et comportent des passages pour l'eau d'alimentation du générateur de vapeur, autour de chacun des tubes engagés dans une ouverture d'une plaque transversale.

Selon l'invention, la plaque transversale 14 disposée le plus près de la plaque tubulaire 3, c'est-à-dire la plaque transversale 14 située le plus bas à l'intérieur de l'enveloppe de faisceau 7 est réalisée sous la forme d'une plaque de répartition qui sera décrite par la suite et qui permet d'obtenir une répartition équilibrée des débits et des vitesses de l'eau d'alimentation dans la partie basse du générateur de vapeur.

La plaque de répartition 14 est disposée au-dessus de la plaque tubulaire 3 à une distance qui peut être comprise entre 450 mm et 550 mm dans le cas d'un faisceau d'un générateur de vapeur présentant une hauteur de l'ordre de 10 m.

Comme il est visible sur la figure 4, la plaque de répartition 14 comporte des ouvertures de passage de tubes réparties dans toute sa surface à l'exception d'une zone 14a de direction diamétrale disposée suivant la rue d'eau centrale 11, à l'aplomb de la zone 3a de la plaque tubulaire 3. En particulier, la plaque de répartition 14 ne comporte pas d'ouverture centrale circulaire de passage d'eau permettant d'éviter ou de limiter des dépôts sur la plaque tubulaire.

La plaque de répartition 14 comporte deux zones dans lesquelles les ouvertures de passage de tubes et d'eau d'alimentation présentent des formes et des sections différentes.

Dans une première zone 15 de forme sensiblement circulaire ayant pour axe l'axe de l'enveloppe de faisceau et du générateur de vapeur, la plaque de répartition est traversée par des ouvertures 17 ayant une première section S₁ et dans une seconde zone périphérique 16 comprise entre la limite extérieure circulaire de la première zone 15 et le bord extérieur de la plaque 14, la plaque 14 est traversée par des secondes ouvertures 18 présentant une seconde section S₂ dont l'aire est inférieure à l'aire de la section S₁ des ouvertures 17.

En réalité, la première zone centrale 15 comporte deux parties de forme sensiblement semi-circulaire séparées par la zone diamétrale 14a de la plaque de répartition 14 dans laquelle la plaque de répartition ne comporte pas d'ouverture de passage de tubes ou d'eau. De même, la zone périphérique 16 est constituée de deux parties séparées par la zone diamétrale 14a de la plaque de répartition. Comme indiqué plus haut, la plaque de répartition 14 ne comporte aucune ouverture centrale circulaire favorisant la circulation de l'eau de refroidissement, la partie centrale de la plaque comportant une partie de la zone diamétrale 14a qui n'est pas traversée par des ouvertures de passage de tubes.

La zone périphérique comporte dans toute sa surface, en dehors de la zone diamétrale 14a, des ouvertures de traversée de tubes réparties suivant la disposition en réseau des tubes du faisceau.

Certaines positions 19 d'ouvertures 18 sont utilisées pour le passage ou la fixation de tirants de suspension des plaques transversales dont la plaque de répartition 14, à l'intérieur de l'enveloppe de faisceau 7.

Comme il est visible sur les figures 2 et 3, l'enveloppe de faisceau 7 comporte des prolongements 7a et 7'a, dans la direction axiale, aux extrémités de la rue d'eau centrale 11 du faisceau du générateur de vapeur qui est délimitée, à sa partie inférieure, par la zone diamétrale 3a de la plaque tubulaire 3 et, à sa partie supérieure, par la zone diamétrale 14a de la plaque de répartition 14, les zones diamétrales 3a et 14a étant exemptes d'ouvertures de passage de tubes. La rue d'eau centrale 11 est délimitée d'autre part latéralement par les deux rangées de tubes du faisceau constituées par les branches droites des tubes 5 ayant le plus faible rayon de courbure, appelées petits cintres. Enfin, la rue d'eau centrale est délimitée par les prolongements 7a et 7'a de l'enveloppe de faisceau 7 qui prolongent l'enveloppe de faisceau, en vis-à-vis de la rue d'eau centrale pratiquement jusqu'à la face supérieure de la plaque tubulaire 3. La partie restante du bord inférieur de l'enveloppe de faisceau 7 est disposée, comme dans le cas des générateurs de vapeur suivant l'art antérieur, à une certaine distance au-dessus de la face supérieure de la plaque tubulaire 3, pour laisser le passage à l'eau d'alimentation du générateur de vapeur circulant de haut en bas dans l'espace annulaire 8.

Les prolongements 7a et 7'a de l'enveloppe de faisceau 7 empêchent l'eau d'alimentation de pénétrer très facilement dans la rue d'eau centrale 11 vide de tubes 5 et de dispositifs de blocage de la circulation d'eau.

L'enveloppe de faisceau 7 est traversée par des ouvertures 21 et 21', dans le prolongement axial des trous de poing 13 de l'enveloppe externe 2, de manière à donner accès à la rue d'eau centrale 11, malgré la présence des prolongements 7a et 7'a de l'enveloppe de faisceau. On peut ainsi en particulier introduire dans la rue d'eau centrale 11, par les trous de poing 13 et les ouvertures correspondantes 21 et 21', une ou plusieurs lances de nettoyage de la face supérieure de la plaque tubulaire 3, l'introduction et le déplacement des lances n'étant gênés par aucun obstacle obstruant la rue d'eau centrale 11. Cette facilité de nettoyage de la plaque tubulaire présente un grand intérêt dans le cas de l'utilisation d'une plaque de répartition 14 ne comportant pas de trou circulaire à sa partie centrale. En effet, comme expliqué plus haut, dans ce cas, la tendance au dépôt de matières en suspension dans l'eau d'alimentation sur la plaque tubulaire augmente du fait de la présence de zones à basse vitesse au-dessus de la plaque tubulaire 3.

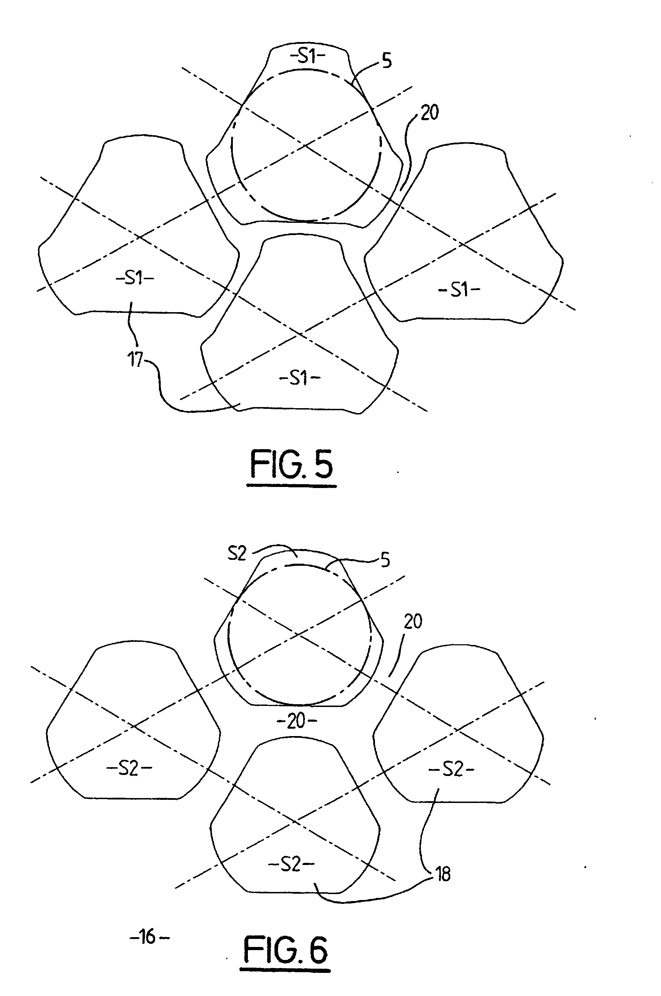

Sur les figures 5 et 6, on a représenté à grande échelle, respectivement, des ouvertures 17 traversant la plaque de répartition 14 dans la zone centrale 15 et des ouvertures 18 traversant la plaque de répartition 14 dans sa zone périphérique 16.

Les ouvertures 17 et 18 sont disposées suivant un réseau à mailles triangulaires, les centres de trois ouvertures voisines étant placés au sommet d'un triangle équilatéral.

Les ouvertures 17 et 18 sont de forme trilobées, ces ouvertures comportant chacune trois lobes de direction radiale s'étendant vers l'extérieur de l'ouverture.

On a représenté sur chacune des figures 5 et 6 le contour externe de la section d'un tube 5 du générateur de vapeur, à l'intérieur d'une ouverture de traversée de la plaque de répartition. Les trois lobes des ouvertures correspondantes constituent des sections de passage d'eau d'alimentation du générateur de vapeur, à travers la plaque de répartition 14, à la périphérie du tube 5.

Comme il est visible en comparant les figures 5 et 6, les lobes de passage d'eau des ouvertures 17 de la partie centrale 15 de la plaque de répartition présentent dans la direction radiale une dimension supérieure aux lobes de passage d'eau des ouvertures 18 de la partie périphérique 16 de la plaque de répartition. Les lobes de passage d'eau des ouvertures 17 sont prolongés vers l'extérieur et élargis circonférentiellement, du fait qu'ils comportent des bords latéraux dont les parties d'extrémité s'écartent angulairement des bords généralement rectilignes de l'ouverture.

Du fait de la présence de lobes de passage d'eau de plus grande dimensions, les ouvertures 17 présentent une section S₁ dont l'aire est supérieure à l'aire de la section S₂ des ouvertures 18 traversant la partie périphérique de la plaque 14.

Par exemple, dans le cas d'un générateur de vapeur dont les tubes ont une section externe de l'ordre de 285 mm², les ouvertures 17 de la partie centrale de la plaque de répartition peuvent présenter une section S₁ dont l'aire est de l'ordre de 540 mm² et des ouvertures 18 traversant la partie périphérique 16 ayant une section S₂ dont l'aire est de l'ordre de 435 mm².

De ce fait, dans la zone centrale 15, l'espace libre de passage d'eau pour chacune des ouvertures 17, c'est-à-dire la somme des trois sections de passage d'eau de chacune des ouvertures est d'environ 250 mm², alors que cette section de passage d'eau n'est que d'environ 150 mm² par ouverture 18, dans la zone périphérique 16.

Cependant, du fait que la zone centrale sensiblement circulaire présente un rayon R₁ qui n'est, par exemple, que le tiers du rayon R de la plaque tubulaire ou inférieur, la surface totale de passage de fluide dans la zone périphérique de la plaque de répartition est de 4 à 5 fois plus importante que la section de passage d'eau d'alimentation dans la zone centrale 15.

De manière plus générale, la zone centrale présente un rayon qui est au plus égal à 40 % du rayon de la plaque de répartition, c'est-à-dire également 40 % du rayon interne de l'enveloppe de faisceau 7, dans laquelle la plaque de répartition est logée pratiquement sans jeu.

De manière préférentielle, le rayon R₁ de la zone centrale sera choisi de manière à être compris entre 1/4 et 1/3 du rayon R de la plaque de répartition.

Dans tous les cas, la section totale de passage d'eau dans la zone périphérique est sensiblement supérieure à la section de passage d'eau dans la partie centrale du générateur de vapeur.

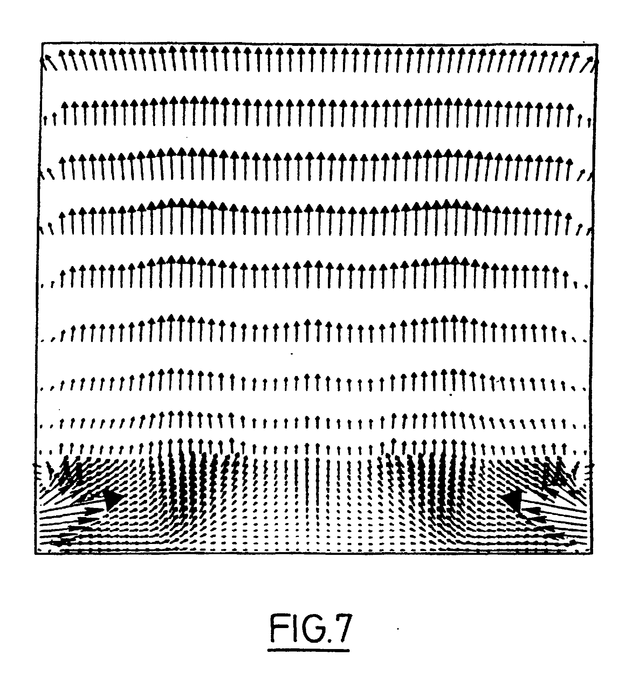

Cette disposition qui permet une répartition équilibrée du débit et des vitesses de l'eau d'alimentation dans la partie basse du générateur de vapeur, comme représenté sur la figure 7, peut entraîner une augmentation des dépôts dans la zone centrale de la plaque tubulaire, par rapport au dispositif suivant l'art antérieur.

Comme expliqué plus haut, le nettoyage de la plaque tubulaire peut être réalisé très facilement, du fait de l'absence de dispositifs de blocage dans la rue d'eau centrale.

Les ouvertures 17 et 18 de la partie centrale et de la partie périphérique de la plaque de répartition peuvent être réalisées par perçage et de préférence par perçage et brochage, de manière à obtenir des ouvertures de forme et de dimensions parfaitement constantes.

Comme il est visible sur les figures 5 et 6, les parties restantes de la plaque de répartition entre les ouvertures 17 ou 18 qui sont désignées respectivement par les repères 20 et 20' présentent des largeurs différentes dans la zone centrale et dans la zone périphérique.

Les parties restantes de la plaque de répartition, désignées par le repère 20, présentent une largeur plus faible dans la partie centrale 15 de la plaque de répartition que dans la partie périphérique du fait de la dimension plus importante des ouvertures de passage de tubes dans la partie centrale.

Le générateur suivant l'invention permet donc d'obtenir une répartition équilibrée des courants de circulation d'eau dans la partie basse du générateur de vapeur, ce qui permet en particulier d'éviter un entraînement excessif de particules en suspension dans l'eau d'alimentation, au-dessus de la plaque de répartition, dans la partie supérieure du faisceau du générateur de vapeur et sur les plaques-entretoises de maintien des tubes du faisceau. Un dépôt accru de matières en suspension sur la plaque tubulaire ne présente pas d'inconvénient majeur, puisqu'il est possible de nettoyer facilement la surface supérieure de la plaque tubulaire. En revanche, le nettoyage des plaques-entretoises dans les parties supérieures du faisceau est une opération très difficile à réaliser.

L'invention ne se limite pas au mode de réalisation qui a été décrit.

C'est ainsi que les ouvertures de la plaque de répartition dans la partie centrale et dans la partie périphérique de cette plaque peuvent présenter des formes différentes de celles qui ont été décrites et représentées, par exemple des formes quadrilobées ; ces ouvertures peuvent également être disposées suivant un réseau différent d'un réseau à mailles triangulaires et par exemple suivant un réseau à mailles carrées.

L'invention s'applique pour des tubes de sections différentes de celle indiquée dans la description.

L'invention s'applique non seulement aux générateurs de vapeur des réacteurs nucléaires à eau sous pression mais également à tout générateur de vapeur dans lequel on réalise la vaporisation d'un fluide secondaire par la chaleur apportée par un fluide primaire circulant à l'intérieur de tubes d'un faisceau.

L'invention pourrait également s'appliquer à des échangeurs de chaleur dans lesquels on met en circulation un fluide primaire et un fluide secondaire.

## Revendications

1. Générateur de vapeur, en particulier générateur de vapeur d'un réacteur nucléaire à eau sous pression, utilisé pour échauffer et vaporiser de l'eau d'alimentation circulant en contact thermique avec un fluide chaud mis en circulation à l'intérieur de tubes (5) d'un faisceau (6) ayant chacun deux branches droites, comprenant une enveloppe externe (2) de forme globalement cylindrique, une plaque tubulaire (3) fixée dans une disposition perpendiculaire à l'axe de l'enveloppe externe (2) et percée d'ouvertures (12) de réception des extrémités des branches droites des tubes (5) du faisceau (6), une enveloppe de faisceau (7) disposée coaxialement à l'intérieur de l'enveloppe externe (2) à l'intérieur de laquelle est disposé le faisceau de tubes (5) dont les branches droites sont parallèles à l'axe du générateur de vapeur et dont un bord inférieur est disposé au-dessus de la plaque tubulaire (3), une pluralité de plaques transversales (10) parallèles entre elles et à la plaque tubulaire (3), fixées dans des dispositions réparties dans la direction de l'axe du générateur de vapeur, à l'intérieur de l'enveloppe de faisceau (7) et traversées par des ouvertures de passage de chacune des branches des tubes (5) du faisceau (6) ménageant des espaces de circulation d'eau d'alimentation ainsi que des moyens (9) d'introduction d'eau d'alimentation dans un espace annulaire (8) entre l'enveloppe externe (2) et l'enveloppe de faisceau (7), au-dessus de la plaque tubulaire (3), de manière que l'eau d'alimentation circule d'abord de haut en bas dans l'espace annulaire (8), puis de bas en haut dans l'enveloppe de faisceau (7) au contact des tubes (5) du faisceau (6) après être passée sous le bord inférieur de l'enveloppe de faisceau (7), **caractérisé par le fait que** la plaque transversale (14) disposée le plus près de la plaque tubulaire (3), appelée plaque de répartition (14) comporte dans une zone centrale sensiblement circulaire ayant pour axe l'axe du générateur de vapeur et un rayon au plus égal à 40 % du rayon de la plaque transversale sensiblement égal au rayon interne de l'enveloppe de faisceau (7) des ouvertures (17) de passage de tubes (5) et d'eau d'alimentation ayant une première section (S₁) et dans une seconde zone (16) à la périphérie de la zone centrale (15) des ouvertures (18) de passage de tubes (5) et d'eau d'alimentation ayant une seconde section (S₂) dont l'aire est inférieure à l'aire de la première section (S₁).

2. Générateur de vapeur selon la revendication 1, **caractérisé par le fait que** le rayon (R₁) de la zone centrale (15) de la plaque de répartition (14) est compris entre 1/4 et 1/3 du rayon (R) de la plaque de répartition.

3. Générateur de vapeur selon l'une quelconque des revendications 1 et 2, **caractérisé par le fait que** la surface totale de passage de l'eau d'alimentation dans les ouvertures (18) de la zone périphérique (16) est supérieure à la surface totale de passage d'eau d'alimentation dans les ouvertures (17) de la zone centrale (15).

4. Générateur de vapeur suivant la revendication 3, **caractérisé par le fait que** la surface totale de passage d'eau dans la zone périphérique est environ quatre à cinq fois plus importante que la surface de passage d'eau dans la zone centrale (15).

5. Générateur de vapeur suivant l'une quelconque des revendications 1 à 4, comportant un faisceau de tubes (5) dont la section extérieure présente une aire d'environ 285 mm², **caractérisé par le fait que** les ouvertures (17) dans la partie centrale (15) de la plaque de répartition (14) ont une aire d'environ 540 mm² et que les ouvertures (18) dans la partie périphérique (16) de la plaque de répartition (14) ont une aire d'environ 435 mm², un espace libre de passage d'eau d'alimentation de 250 mm² environ étant ménagé à la périphérie de chacun des tubes (5) engagés dans une ouverture centrale (17) et un espace libre de passage d'eau d'environ 150 mm² étant ménagé autour de chacun des tubes (5) engagé dans une ouverture (18) de la partie périphérique (16) de la plaque de répartition (14).

6. Générateur de vapeur suivant l'une quelconque des revendications 1 à 5, **caractérisé par le fait que** les ouvertures de passage de tubes (17, 18) dans la partie centrale (15) et dans la partie périphérique (16) de la plaque de répartition (14) présentent des sections de passage d'eau ou lobes, autour des tubes (5) du faisceau (6) s'étendant radialement vers l'extérieur des ouvertures (17, 18), les lobes des ouvertures (17) dans la partie centrale (15) de la plaque de répartition (14) ayant une dimension dans la direction radiale supérieure à la dimension dans la direction radiale des lobes des ouvertures (18) de la partie périphérique (16) de la plaque de répartition (14).

7. Générateur de vapeur selon l'une quelconque des revendications 1 à 6, **caractérisé par le fait que** les ouvertures (17, 18) de la plaque de répartition (14) sont réalisées par perçage et brochage.

8. Générateur de vapeur selon l'une quelconque des revendications 1 à 7, **caractérisé par le fait que** la plaque de répartition est disposée à une distance de la plaque tubulaire (3) comprise entre 450 mm et 550 mm dans le cas d'un faisceau d'un générateur de vapeur d'une hauteur voisine de 10 m.

9. Générateur de vapeur suivant l'une quelconque des revendications 1 à 8 comportant une plaque tubulaire ayant une zone centrale de direction diamétrale (3a) exempte d'ouvertures de réception de tubes (5) du faisceau, **caractérisé par le fait que** la plaque de répartition (14) comporte une zone centrale diamétrale (14a) exempte d'ouvertures (17, 18) de passage de tubes (5) et d'eau d'alimentation, de manière qu'un espace libre appelé rue d'eau centrale (11) soit délimité à l'intérieur de l'enveloppe de faisceau (7), entre la zone centrale diamétrale (3a) de la plaque tubulaire (3), la zone centrale diamétrale (14a) de la plaque de répartition (14) et deux rangées de branches droites de tubes (5) du faisceau (6) du générateur de vapeur engagées dans des ouvertures de réception (12) de la plaque tubulaire (3) adjacentes à la zone centrale diamétrale (3a) exempte d'ouvertures de réception.

10. Générateur de vapeur suivant la revendication 9, **caractérisé par le fait que** l'enveloppe de faisceau (7) comporte des prolongements dans la direction axiale (7a, 7'a), par rapport au bord inférieur de l'enveloppe de faisceau, sensiblement jusqu'à la face supérieure de la plaque tubulaire (3), en vis à vis des deux extrémités de la rue d'eau centrale (11) dans la direction diamétrale.

11. Générateur de vapeur suivant la revendication 10, comportant une enveloppe externe présentant des trous de poing donnant accès à la rue d'eau centrale (11), aux extrémités diamétrales de la rue d'eau centrale (11), **caractérisé par le fait que** l'enveloppe de faisceau (7) comporte des trous (21, 21') d'accès à la rue d'eau centrale, dans le prolongement axial des trous de poing (13).

## Patentansprüche

1. Dampferzeuger, insbesondere Dampferzeuger für einen Druckwasser-Kernreaktor, zum Aufheizen und Verdampfen von Brauchwasser, das in thermischem Kontakt mit einer heißen Flüssigkeit umgewälzt wird, die in einem Bündel (6) von Röhren (5) mit jeweils zwei geraden Abschnitten umgewälzt wird, welcher eine Außenhülle (2) allgemein zylindrischer Form, eine röhrenförmige Platte (3), die in einer zu der Achse der Außenhülle (2) senkrechten Position angeordnet ist und mit Öffnungen (12) für das Aufnehmen der Enden von geraden Abschnitten des Bündels (6) von Röhren (5) versehen ist, eine Bündelummantelung (7), die koaxial in der Außenhülle (2) angeordnet ist, in welcher das Bündel aus Röhren (5) angeordnet ist, dessen gerade Abschnitte parallel zu der Achse des Dampferzeugers verlaufen und dessen Innenrand oberhalb der röhrenförmigen Platte (3) angeordnet ist, mehrere Querplatten (10), die parallel zueinander und zu der röhrenförmigen Platte (3) und in der Richtung der Achse des Dampferzeugers fest verteilt in der Bündelummantelung (7) angeordnet sind, und Durchgangsöffnungen für jeden der Abschnitte des Bündels (6) von Röhren (5) aufweisen, die Raum für das Umwälzen von Brauchwasser lassen, sowie Einrichtungen (9) für das Einfüllen von Brauchwasser in einen ringförmigen Raum (8) zwischen der Außenhülle (2) und der Bündelummantelung (7) umfasst, und zwar oberhalb der röhrenförmigen Platte (3), so dass das Brauchwasser zunächst in dem ringförmigen Raum (8) von oben nach unten und dann in der Bündelummantelung (7) in Kontakt mit den Röhren (5) des Bündels (6) von unten nach oben umgewälzt wird, nachdem es unter dem unteren Rand der Bündelummantelung (7) hindurchgeströmt ist,
**dadurch gekennzeichnet, dass**
die Querplatte (14), die sich am nächsten an der röhrenförmigen Platte (3) befindet und als Verteilerplatte (14) bezeichnet wird, in einem Zentralbereich, der im wesentlichen kreisförmig ist, dessen Achse mit der Achse des Dampferzeugers zusammenfällt und dessen Radius höchstens 40% des Radius der Querplatte beträgt, der im wesentlichen gleich dem Innenradius der Bündelummantelung (7) ist, Durchgangsöffnungen (17) für die Röhren (5) und Brauchwasser aufweist mit einem ersten Querschnitt (S1) und in einem zweiten Bereich (16) am Rand des Zentralbereichs (15) Durchgangsöffnungen (18) für die Röhren (5) und Brauchwasser mit einem zweiten Querschnitt (S2) aufweist, dessen Fläche kleiner als die Fläche des ersten Querschnitts (S1) ist.

2. Dampferzeuger nach Anspruch 1,
**dadurch gekennzeichnet, dass**
der Radius (R1) des Zentralbereichs (15) der Verteilerplatte (14) zwischen 1/4 und 1/3 des Radius (R) der Verteilerplatte beträgt.

3. Dampferzeuger nach Anspruch 1 oder 2,
**dadurch gekennzeichnet, dass**
die gesamte Durchgangsfläche für das Brauchwasser in den Öffnungen (18) des Randbereichs (16) größer als die gesamte Durchgangsfläche für das Brauchwasser in den Öffnungen (17) des Zentralbereichs (15) ist.

4. Dampferzeuger nach Anspruch 3,
**dadurch gekennzeichnet, dass**
die gesamte Durchgangsfläche für das Wasser in dem Randbereich etwa vier- bis fünfmal größer als die Durchgangsfläche für das Wasser in dem Zentralbereich (15) ist.

5. Dampferzeuger nach einem der Ansprüche 1 bis 4,
mit einem Bündel von Röhren (5), deren Außenquerschnitt eine Fläche von ungefähr 285mm² aufweist,
**dadurch gekennzeichnet, dass**
die Öffnungen (17) in dem Zentralbereich (15) der Verteilerplatte (14) eine Fläche von ungefähr 540mm² aufweisen und die Öffnungen (18) in dem Randbereich (16) der Verteilerplatte (14) eine Fläche von ungefähr 435mm² aufweisen, wobei ein freier Raum für den Durchgang von Brauchwasser von ungefähr 250mm² am Rand jeder der Röhren (5) in einer zentralen Öffnung (17) bleibt und ein freier Raum für den Durchgang von Wasser von ungefähr 150mm² in einer Öffnung (18) im Randbereich (16) der Verteilerplatte (14) bleibt.

6. Dampferzeuger nach einem der Ansprüche 1 bis 5,
**dadurch gekennzeichnet, dass**
die Durchgangsöffnungen der Röhren (17, 18) in dem Zentralbereich (15) und in dem Randbereich (16) der Verteilerplatte (14) einen Querschnitt für den Durchgang von Wasser oder Keulen um die Röhren (5) des Bündels (6) aufweisen, die sich radial aus den Öffnungen (17, 18) erstrecken, wobei die Keulen der Öffnungen (17) in dem Zentralbereich (15) der Verteilerplatte (14) eine Ausdehnung in radialer Richtung haben, die größer als die Ausdehnung in radialer Richtung der Keulen der Öffnungen (18) im Randbereich (16) der Verteilerplatte (14) ist.

7. Dampferzeuger nach einem der Ansprüche 1 bis 6,
**dadurch gekennzeichnet, dass**
die Öffnungen (17, 18) der Verteilerplatte (14) gebohrt und entgratet werden

8. Dampferzeuger nach einem der Ansprüche 1 bis 7,
**dadurch gekennzeichnet, dass**
die Verteilerplatte in einem Abstand zwischen 450mm und 550mm von der röhrenförmigen Platte (3) angeordnet ist, wenn ein Bündel eines Dampferzeugers eine Höhe von etwa 10m hat.

9. Dampferzeuger nach einem der Ansprüche 1 bis 8,
mit einer röhrenförmigen Platte mit einem Zentralbereich in diametraler Richtung (3a) ohne Aufnahmeöffnungen für Röhren (5) des Bündels,
**dadurch gekennzeichnet, dass**
die Verteilerplatte (14) einen diametralen Zentralbereich (14a) ohne Öffnungen (17, 18) für den Durchgang von Röhren (5) und Brauchwasser aufweist, so dass ein freier Raum, als Zentralwasserführung (11) bezeichnet, innen von der Bündelummantelung (7) zwischen dem diametralen Zentralbereich (3a) der röhrenförmigen Platte (3), dem diametralen Zentralbereich (14a) der Verteilerplatte (14) und zwei Reihen von geraden Abschnitten des Bündels (6) von Röhren (5) des Dampferzeugers begrenzt wird, die in den Aufnahmeöffnungen (12) der röhrenförmigen Platte (3) neben dem diametralen Zentralbereich (3) ohne Aufnahmeöffnungen verlaufen.

10. Dampferzeuger nach Anspruch 9,
**dadurch gekennzeichnet, dass**
die Bündelummantelung (7) Verlängerungen in der axialen Richtung (7, 7'a) in Bezug auf den unteren Rand der Bündelummantelung aufweist, und zwar im wesentlichen bis zu der oberen Seite der röhrenförmigen Platte (3) gegenüber den beiden Enden der Zentralwasserführung (11) in diametraler Richtung.

11. Dampferzeuger nach Anspruch 10,
mit einer Außenhülle mit Handlöchern für den Zugang zu der Zentralwasserführung (11) an den diametralen Enden der Zentralwasserführung (11),
**dadurch gekennzeichnet, dass**
die Bündelummantelung (7) Löcher (21, 21') für den Zugang zu der Zentralwasserführung in der axialen Verlängerung der Handlöcher (13) aufweist.

## Claims

1. Steam generator, in particular a steam generator of a pressurized water nuclear reactor, used to heat and vaporise feed water circulating in thermal contact with a hot fluid put into circulation inside tubes (5) of a cluster (6) each having two straight branches, comprising an external envelope (2) with a generally cylindrical form, a tubular plate (3) attached in a position perpendicular to the axis of the external envelope (2) and perforated with openings (12) for receiving the ends of the straight branches of the tubes (5) of the cluster (6), a cluster envelope (7) positioned coaxially inside the external envelope (2) inside which the cluster of tubes (5) is positioned of which the straight branches are parallel to the axis of the steam generator and of which a lower edge is positioned above the tubular plate (3), a plurality of transverse plates (10) parallel to each other and to the tubular plate (3), attached in positions distributed in the direction of the axis of the steam generator, inside the cluster envelope (7) and traversed by openings for the passage of each of the branches of the tubes (5) of the cluster (6) providing spaces for the circulation of feed water as well as means (9) for introducing feed water into an annular space (8) between the external envelope (2) and the cluster envelope (7), above the tubular plate (3), so that the feed water circulates first of all downwards in the annular space (8), and then upwards in the cluster envelope (7) in contact with the tubes (5) of the cluster (6) after being passed under the lower edge of the cluster envelope (7), **characterized in that** the transverse plate (14) positioned closest to the tubular plate (3), known as the distribution plate (14) includes in a substantially circular central zone having for its axis the axis of the steam generator and a radius at most equal to 40 % of the radius of the transverse plate substantially equal to the internal radius of the cluster envelope (7), openings (17) for the passage of tubes (5) and feed water having a first section (S₁) and in a second zone (16) at the periphery of the central zone (15) openings (18) for the passage of tubes (5) and feed water having a second section (S₂) of which the area is less than the area of the first section (S₁).

2. Steam generator according to claim 1, **characterized in that** the radius (R₁) of the central zone (15) of the distribution plate (14) lies between 1/4 and 1/3 of the radius (R) of the distribution plate.

3. Steam generator according to either of claims 1 or 2, **characterized in that** the total surface area for the passage of feed water in the openings (18) of the peripheral zone (16) is greater than the total surface area for the passage of feed water in the openings (17) of the central zone (15).

4. Steam generator according to claim 3, **characterized in that** the total surface area for the passage of water in the peripheral zone is approximately four to five times greater than the surface area for the passage of water in the central zone (15).

5. Steam generator according to any one of claims 1 to 4, comprising a cluster of tubes (5) of which the external section has an area of approximately 285 mm², **characterized in that** the openings (17) in the central part (15) of the distribution plate (14) have an area of approximately 540 mm² and that the openings (18) in the peripheral part (16) of the distribution plate (14) have an area of approximately 435 mm², a free space for the passage of feed water of approximately 250 mm² being provided at the periphery of each of the tubes (5) engaged in a central opening (17) and a free space for the passage of water of approximately 150 mm² being provided around each of the tubes (5) engaged in an opening (18) of the peripheral part (16) of the distribution plate (14).

6. Steam generator according to any one of claims 1 to 5, **characterized in that** the openings for the passage of tubes (17, 18) in the central part (15) and in the peripheral part (16) of the distribution plate (14) have sections for the passage of water or lobes, around the tubes (5) of the cluster (6) extending radially towards the exterior of the openings (17, 18), the lobes of the openings (17) in the central part (15) of the distribution plate (14) having a dimension in the radial direction greater than the dimension in the radial direction of the lobes of the openings (18) of the peripheral part (16) of the distribution plate (14).

7. Steam generator according to any one of claims 1 to 6, **characterized in that** the openings (17, 18) of the distribution plate (14) are produced by drilling and broaching.

8. Steam generator according to any one of claims 1 to 7, **characterized in that** the distribution plate is positioned at a distance of between 450 mm and 550 mm from the tubular plate (3) in the case of a cluster of a steam generator with a height close to 10 m.

9. Steam generator according to any one of claims 1 to 8, comprising a tubular plate having a central zone with a diametral direction (3a) lacking openings for receiving tubes (5) of the cluster, **characterized in that** the distribution plate (14) includes a central diametral zone (14a) lacking openings (17, 18) for the passage of tubes (5) and feed water, so that a free space known as a central water channel (11) is delimited inside the cluster envelope (7), between the central diametral zone (3a) of the tubular plate (3), the central diametral zone (14a) of the distribution plate (14) and two rows of straight branches of the tubes (5) of the cluster (6) of the steam generator engaged in the receiving openings (12) of the tubular plate (3) adjacent to the central diametral zone (3a) lacking receiving openings.

10. Steam generator according to claim 9, **characterized in that** the cluster envelope (7) has extensions in the axial direction (7a, 7'a), with respect to the lower edge of the cluster envelope, substantially as far as the upper face of the tubular plate (3), opposite the two ends of the central water channel (11) in the diametral direction.

11. Steam generator according to claim 10, having an external envelope having hand holes giving access to the central water channel (11), at the diametral ends of the central water channel (11), **characterized in that** the cluster envelope (7) has holes (21, 21') giving access to the central water channel, in the axial extension of the hand holes (13).
